# EUROPÄISCHE PATENTSCHRIFT

(11) **EP 4 516 415 B1**
(45) Veröffentlichungstag und Bekanntmachung des Hinweises auf die Patenterteilung: **07.10.2026**
(21) Anmeldenummer: 24196788.4
(22) Anmeldetag: 27.08.2024
(51) Int. Cl.: B07C 5/36, B25J 11/00, B25J 15/00

(54) **SPARGELSORTIERMASCHINE UND VERFAHREN**
ASPARAGUS SORTING MACHINE AND METHOD
MACHINE ET PROCÉDÉ DE TRI D'ASPERGES

(30) Priorität: 29.08.2023 DE 102023123172
(43) Veröffentlichungstag der Anmeldung: 05.03.2025
(73) Patentinhaber: Neubauer, Christoph, 59514 Welver (DE); Neubauer, Felix, 59514 Welver (DE)
(72) Erfinder: Neubauer, Christoph, 59514 Welver (DE); Neubauer, Felix, 59514 Welver (DE)
(74) Vertreter: Fritz Patent- und Rechtsanwälte PartmbB

(56) Entgegenhaltungen:
- EP-A1- 4 086 012
- EP-B1- 1 200 312
- DE-C- 257 783

## Beschreibung

Die vorliegende Erfindung betrifft eine Spargelsortiermaschine umfassend wenigstens eine Sortiereinrichtung zur Sortierung des Spargels mit wenigstens einer Mehrzahl an Sortierfächern.

Die Verarbeitung von Bleich- oder Grünspargel erfolgt in mehreren Schritten: Nach der Ernte auf dem Feld werden die Spargelstangen von Erde und Schmutz befreit. Anschließend wird der Spargel auf das Verkaufsmaß gekürzt, um zum Beispiel einen Weißfuß zu entfernen. Anschließend werden die einzelnen Spargelstangen nach Bewertungskriterien, wie Länge, Durchmesser und Geradheit, Oberfläche und/oder dergleichen klassifiziert und entsprechend sortiert. Anschließend wird der sortierte Spargel zum Verkauf verpackt. Optional können weitere Schritte mit umfasst sein.

Für die wirtschaftliche Umsetzung der Verarbeitungsschritte des Spargels werden Spargelsortiermaschinen, vergleiche DE 257 783 C, eingesetzt, welche den Spargel automatisiert reinigen, kürzen, klassifizieren und dann anhand der Bewertungskriterien sortieren. Zur Verarbeitung wird der Spargel von Hand durch Erntehelfer auf Förderbänder mit Mitnehmern aufgelegt. Die Klassifizierung erfolgt anhand mehrerer Bildaufnahmen einer Kamera, mit der auch über Volumenberechnung das Gewicht jeder Spargelstange definiert wird. Danach wird der Spargel automatisch in den definierten Ablagefächern abgelegt. Der Spargel wird von Hand durch Erntehelfer aus den Entnahmefächern entnommen und in entsprechenden Erntekisten abgelegt. Dieses ganze Prozedere ist mit einem hohen Aufwand an Sortierpersonal verbunden, das auch entsprechend geschult werden muss. Der Anteil der Kosten an dem Verkaufspreis, welche allein dem Personal zuzuordnen ist, ist dadurch hoch. Allgemeine Methoden zur Prozessautomatisierung sind z. B. aus EP 1 200 312 B1 bekannt.

Es ist deshalb die Aufgabe der vorliegenden Erfindung eine Spargelsortiermaschine und ein Verfahren zum Betreiben der Spargelsortiermaschine zur Verfügung zu stellen, welches eine kostengünstigere Sortierung und Ablage des Spargels ermöglicht.

Die Aufgabe wird gelöst durch eine Spargelsortiermaschine mit den Merkmalen nach Anspruch 1 und ein Verfahren mit den Merkmalen nach Anspruch 13. Bevorzugte Weiterbildungen sind Gegenstand der Unteransprüche. Weitere Eigenschaften und Vorteile der Erfindung ergeben sich aus der allgemeinen Beschreibung und aus der Beschreibung des Ausführungsbeispiels.

Die erfindungsgemäße Spargelsortiermaschine umfasst wenigstens eine Sortiereinrichtung zur Sortierung von Spargel mit wenigstens einer Mehrzahl an Entnahmefächern zur Aufnahme des sortierten Spargels. Es ist wenigstens eine automatisierte Entnahmevorrichtung zur Entnahme und Ablage des sortierten Spargels, insbesondere aus den Entnahmefächern, umfasst. Die Entnahmevorrichtung umfasst wenigstens eine Robotereinrichtung.

Die Erfindung hat viele Vorteile. Ein erheblicher Vorteil der Erfindung ist, dass die Entnahme und Ablage des Spargels aus den Entnahmefächern automatisiert erfolgt. Dadurch kann die Anzahl an Personen, die zum Betrieb der Spargelsortiermaschine notwendig sind, erheblich verringert werden. Weiter reduzieren sich die Kosten für die Verarbeitung des Spargels wenigstens erheblich.

Erfindungsgemäß umfasst die Entnahmevorrichtung wenigstens eine Robotereinrichtung. Erfindungsgemäß erlaubt die Robotereinrichtung eine automatisierte Entnahme des Spargels aus den Entnahmefächern. Vorteilhaft kann durch eine Robotereinrichtung eine Handhabung des Spargels ohne oder nur mit geringen konstruktiven Anpassungen der restlichen Spargelsortiermaschine erfolgen. Dadurch kann eine Robotereinrichtung vorteilhaft auch bei vielen bestehenden Spargelsortiermaschinen nachgerüstet werden, welche mittels Erntehelfern betrieben werden.

Besonders bevorzugt umfasst die Robotereinrichtung wenigstens einen, insbesondere um mehrere Schwenkachsen und/oder Linearachsen, beweglichen Roboterarm. Der Roboterarm ist insbesondere wenigstens um eine Schwenkachse, vorzugsweise um eine im Wesentlichen vertikale Hochachse, verschwenkbar. Vorzugsweise weist der Roboterarm mehrere Schwenkachsen auf. Vorteilhaft ermöglicht die Verschwenkung um wenigstens eine Schwenkachse eine genaue Positionierung des Roboterarms zur Handhabung des Spargels. Es sind Bewegungsabläufe möglich, welche einem menschlichen Bewegungsablauf nachempfunden sind, sodass eine Nachrüstung bei bestehenden und durch Erntehelfer betriebenen Sortiermaschinen problemlos möglich ist. Darüber hinaus ermöglicht die Verschwenkung des Roboterarms um die Hochachse außerdem einen besonders großen Arbeitsraums des Roboterarms. Vorteilhaft kann hierdurch beispielsweise eine Ablage in mehrere Sammelbehälter mit besonders großem Volumen erfolgen, die auf einer zu den Entnahmefächern gegenüberliegenden Seite des Roboterarms angeordnet sind. Darüber hinaus können auch weitere Linearachsen den Arbeitsraum des Roboterarms noch weiter vergrößern.

Vorzugsweise umfasst die Robotereinrichtung wenigstens eine Greifereinrichtung zur Handhabung des sortierten Spargels, und insbesondere zur Aufnahme des sortierten aus den Entnahmefächern. Vorteilhaft ist der kommissionierte Spargel durch die Greifereinrichtung besonders effizient aufnehmbar und handhabbar.

Zweckmäßig weist die Greifereinrichtung wenigstens einen Greiferkörper und wenigstens einen, insbesondere beweglichen und bevorzugt verschwenkbaren, Greiferarm auf. Vorteilhaft umfasst die Greifereinrichtung wenigstens zwei oder mehr verschwenkbar an dem Greiferkörper aufgenommene Greiferarme Insbesondere bilden der Greiferkörper und der wenigstens ein Greiferarm einen Aufnahmeraum für die Aufnahme des Spargels, vorzugsweise aus den Entnahmefächern der Spargelsortiermaschine. Vorteilhaft können der Spargel und bevorzugt die einzelnen Spargelstangen beschädigungsfrei und sicher innerhalb des Aufnahmeraums aufgenommen und transportiert werden. Vorteilhaft wird durch eine Schließbewegung, d. h. eine Verschwenkung beim Schließen der Greiferarme eine Bewegung des sortierten Spargels in den Aufnahmeraum gefördert.

Vorzugsweise ist wenigstens eine Aktuatoreinheit zur Durchführung einer Schwenkbewegung wenigstens eines Greiferarms vorhanden. Insbesondere können weitere Aktuatoreinheiten, beispielsweise für eine einstellbare Spanneinheit oder dergleichen, vorhanden sein.

Bevorzugt ist der Greiferarm wenigstens bereichsweise schaufelförmig ausgebildet ist. Insbesondere ist der Greiferarm wenigstens teilweise gebogen ausgebildet und/oder umfasst den Aufnahmeraum wenigstens teilweise. Insbesondere weist der Greiferarm eine nach innen in Richtung des Aufnahmeraums gewölbte und/oder gebogene Geometrie auf. Vorteilhaft werden dadurch eine verbesserte Aufnahme und Förderung der Spargelstangen in den Aufnahmeraum ermöglicht, sodass vorteilhaft alle Spargelstangen aus einem Entnahmefach sicher in dem Aufnahmeraum aufnehmbar sind.

Besonders bevorzugt weist der Greiferarm einen beweglichen Endbereich auf. Vorzugsweise ist der bewegliche Endbereich separat bewegbar und insbesondere verschwenkbar ist. Vorzugsweise kann die Schwenkbewegung von einem offenen Zustand in einen geschlossenen Zustand durch den beweglichen Endbereich so durchgeführt werden, dass alle Spargelstangen in den Aufnahmeraum sicher aufgenommen werden.

Bevorzugt weist die Greifereinrichtung wenigstens eine einstellbare Spanneinheit auf. Insbesondere dient die Spanneinheit zur Fixierung des aufgenommenen Spargels in dem Aufnahmeraum. Vorteilhaft wird der aufgenommene Spargel durch die Spanneinheit wenigstens gegen einen Teil des Greiferkörpers und/oder der Greiferarme innerhalb des Aufnahmeraums verspannt, sodass der aufzunehmende Spargel nicht aus dem Aufnahmeraum herausfallen kann. Vorteilhaft kann dadurch eine sichere Handhabung des aufgenommenen Spargels gewährleistet werden.

Die Spanneinheit umfasst vorzugsweise wenigstens ein Spannelement zur Verspannung des Spargels in dem Aufnahmeraum. Insbesondere ist das Spannelement als formsteifes und elastisches Band ausgebildet, welches an den äußeren Enden befestigt ist und welches sich dadurch bogenförmig in den Aufnahmeraum erstreckt. Bei der Aufnahme von Spargel verformt sich das Spannelement elastisch und drückt und/oder klemmt dadurch den aufgenommenen Spargel gegen die geschlossenen Greiferarme, sodass eine sichere Handhabung ermöglicht wird. Besonders vorteilhaft ist das als Band ausgebildete Spannelement besonders kostengünstig und langlebig.

Insbesondere umfasst die Spanneinheit eine Mehrzahl an Spannelementen, welche wenigstens teilweise nebeneinander und/oder voreinander angeordnet sind. Insbesondere erstrecken sich die Mehrzahl an Spanelementen jeweils bogenförmig in den Aufnahmeraum. Vorteilhaft kann die Haltekraft durch eine Mehrzahl an Spannelementen noch besser auf die Spargelstangen aufgebracht werden, vorteilhaft auch in Bereichen, in welchen sich eine Kontur der Mehrzahl an Spargelstangen stark und/oder sprunghaft ändern kann. Vorzugsweise umfasst die Spanneinheit eine Einstelleinheit zur Einstellung der Position des Spannelements innerhalb des Aufnahmeraums. Insbesondere ist die Einstelleinheit an dem Greiferkörper angeordnet. Vorteilhaft ist das Spannelement durch die Einstelleinheit wenigstens entlang einer linearen Achse verfahrbar, welche sich insbesondere von dem Greiferkörper zu den Greiferarmen erstreckt. Vorteilhaft kann dadurch eine Position des Spannelements an eine aufzunehmende Spargelmenge angepasst werden, sodass eine sichere Handhabung gewährleistbar ist.

Vorteilhaft können durch die Greifereinrichtung eine Mehrzahl von sortierten Spargelstangen gleichzeitig aus einem Entnahmefach sicher aufgenommen werden. Insbesondere liegen die Spargelstangen einer Sortierklasse; insbesondere in einer vordefinierte Menge, hierfür in einem Entnahmefach vor. Eine vordefinierte Menge kann hier vorteilhaft ein Gewicht und/oder eine Stückzahl, insbesondere innerhalb eines Toleranzbereichs umfassen.

Zum Greifen der Spargelstangen wird die Greifereinrichtung vorzugsweise über dem Entnahmefach positioniert. Bevorzugt werden die Greiferarme, insbesondere mit den beweglichen Endbereichen, durch eine Schwenkbewegung in einen offenen Zustand überführt. Die Greifereinrichtung wird dann so über der vordefinierten Menge in dem Entnahmefach positioniert, dass die vordefinierte Menge an Spargelstangen von dem Aufnahmeraum der Greifereinrichtung umfasst und/oder umschlossen wird. Vorzugsweise werden die Greiferarme dann in einen geschlossenen Zustand überführt. Bevorzugt werden die Spargelstangen durch eine Schwenkbewegung der sich schließenden Greiferarme, insbesondere mit den beweglichen Endbereichen, in dem Aufnahmeraum aufgenommen.

Vorteilhaft lassen sich durch die Greifereinrichtung die in dem Aufnahmeraum aufgenommenen Spargelstangen aus dem Entnahmefach entnehmen und insbesondere in einem der Sammelbehälter ablegen. Vorteilhaft bleibt bei der Handhabung eine Ausrichtung der Spargelstangen zueinander wenigstens im Wesentlichen erhalten. Vorzugsweise ändert sich eine Orientierung der einzelnen Spargelstangen zueinander im Wesentlichen nicht während des gesamten Handhabungsvorgangs. Vorteilhaft können alle in einem Entnahmefach befindlichen sortierten Spargelstangen entnommen und in dem Sammelbehälter abgelegt werden. Vorteilhaft werden die Mehrzahl an Spargelstangen als Bündel oder bündelförmig gegriffen. Vorzugsweise werden die Spargelstangen durch die einstellbare Spanneinheit in dem Aufnahmeraum festgeklemmt und/oder fixiert, sodass diese beim Bewegen des Roboterarms nicht aus dem Aufnahmeraum herausfallen können.

In wenigstens einer vorteilhaften Ausgestaltung umfasst die Robotereinrichtung wenigstens eine Portaleinheit, welche wenigstens eine Bewegung entlang von einer Linearachse, insbesondere in einer Ebene parallel zum Boden ermöglicht. Insbesondere ist der Roboterarm verfahrbar an der Portaleinheit aufgenommen. Vorteilhaft wird durch die Portaleinheit der Arbeitsraum des Roboterarms erheblich vergrößert, da der Roboterarm entlang der Entnahmefächer verfahrbar ist. Vorzugsweise kann die Robotereinrichtung auch zwei oder mehr Portaleinheiten umfassen, wobei beispielsweise ein Roboterarm an jeder der Portaleinheiten verfahrbar aufgenommen ist.

Vorzugsweise weist die Entnahmeeinrichtung wenigstens eine Steuereinrichtung, insbesondere zur Steuerung der Robotereinrichtung, auf. Vorzugsweise umfasst die Steuereinrichtung wenigstens eine Schnittstelleneinheit zur Herstellung einer Datenverbindung mit der Sortiereinrichtung. Vorzugsweise kann durch die Schnittstelleneinheit eine Funkverbindung und/oder eine Verbindung über ein Datenkabel mit einer Steuereinheit der Spargelsortiermaschine und insbesondere der Sortiereinrichtung hergestellt werden.

Vorzugsweise weist die Entnahmeeinrichtung eine zertifizierte Sicherheitseinrichtung auf, die den Menschen vor Schäden schützt. Vorteilhaft können dadurch Verletzungen von Menschen durch die Entnahmeeinrichtung verhindert werden.

Vorteilhaft können die durch die Steuereinrichtung der Entnahmeeinrichtung notwendigen Betriebsparameter und Daten empfangen, verarbeitet und übermittelt werden, um die automatisierte Entnahmeeinrichtung zu steuern. Vorteilhaft kann die Steuerung der Entnahmeeinrichtung dadurch direkt anhand der Steuerbefehle der Spargelsortiermaschine und insbesondere der Sortiereinrichtung erfolgen. Dadurch kann vorteilhaft auf separate Sensoren an der Entnahmeeinrichtung, insbesondere zur Überwachung der Entnahmefächer verzichtet werden. Weiter können auch Sensoren der Sortiereinrichtung oder dergleichen genutzt werden, um eine Steuerung der Entnahmeeinrichtung zu ermöglichen. Dadurch kann es darüber hinaus sogar möglich sein, dass zumindest weitestgehend auch auf andere Sensoren an der Entnahmeeinrichtung zur Steuerung dieser und insbesondere der Robotereinrichtung, wie z. B. Lagesensoren, Winkelsensoren und/oder Kameras, verzichtet werden kann.

Alternativ und/oder zusätzlich umfasst die Entnahmeeinrichtung auch Sensoren zur Steuerung. Im Falle einer vorhandenen Datenverbindung können die Sensordaten zusätzlich zur Steuerung der automatisierten Entnahmeeinrichtung genutzt werden, beispielsweise um eine Positionsgenauigkeit bei der Aufnahme des sortierten Spargels zu verbessern. Darüber hinaus kann eine Steuerung der Entnahmeeinrichtung auch im Wesentlichen oder nahezu vollständig durch die Sensoren der Entnahmeeinrichtung erfolgen, wenn beispielsweise keine Datenverbindung zwischen der Entnahmeeinrichtung und der restlichen Spargelsortiermaschine vorliegt. Vorteilhaft ist die automatisierte Entnahmeeinrichtung dadurch im Wesentlichen unabhängig von der Spargelsortiermaschine betreibbar.

Insbesondere umfasst die automatisierte Entnahmeeinrichtung wenigstens einen Sammelbereich für wenigstens einen und insbesondere eine Mehrzahl an entnehmbaren Sammelbehältern. Vorzugsweise umfasst die Entnahmeeinrichtung einen Sammelbehälter und insbesondere eine Mehrzahl an Sammelbehältern zur Ablage des sortierten Spargels aus den Entnahmefächern, welche an der Aufnahme aufnehmbar sind. Die Anzahl der Sammelbehälter kann variieren. Insbesondere kann für jedes Entnahmefach ein Sammelbehälter vorgesehen sein. Vorzugsweise kann der Spargelvorhanden sein, wenn zum Beispiel der entnommene Spargel verschiedener Entnahmefächer, insbesondere gleicher Sortierung, und besonders bevorzugt gleicher Klassifizierung, in einem Sammelbehälter gesammelt wird. Vorteilhaft kann wenigstens der kommissionierte und, insbesondere auch klassifizierte Spargel in den Sammelbehältern nach Sortierklassen getrennt abgelegt werden. Die Sammelbehälter können per Hand und/oder wenigstens teilweise automatisiert abtransportiert und/oder ausgetauscht werden. Vorteilhaft wird so ein kontinuierlicher Betrieb der Spargelsortiermaschine und insbesondere der automatisierten Entnahmeeinrichtung ermöglicht.

Vorzugsweise umfasst die Sortiereinrichtung wenigstens eine Wiegeeinrichtung für jedes Entnahmefach. Vorteilhaft ermöglicht die Wiegeeinrichtung ein Abwiegen des Spargels beim Sortieren in jedem Entnahmefach. In jedem Entnahmefach kann das Gewicht an Spargel dadurch direkt durch die Wiegeeinrichtung überwacht werden. Ein Überschreiten eines, insbesondere einstellbaren, Zielgewichts, kann registriert werden, sodass bis zur Entnahme des sortierten Spargels aus dem Entnahmefach kein weiterer Spargel in dem Entnahmefach durch die Sortiereinrichtung abgelegt wird. Vorteilhaft können dadurch direkt verkaufsfertige Mengen an sortiertem Spargel abgewogen und anschließend kommissioniert werden. Im Falle einer vorhandenen Datenverbindung zwischen der Sortiereinrichtung und der automatisierten Entnahmeeinrichtung kann das Überschreiten des Zielgewichts in einem Entnahmefach an die Entnahmeeinrichtung übermittelt werden, sodass diese den abgewogenen und sortierten Spargel aus dem Entnahmefach aufnehmen kann.

In wenigstens einer vorteilhaften Weiterbildung ist wenigstens eine Klassifiziereinrichtung zur Klassifizierung des Spargels umfasst. Vorteilhaft wird der Spargel nach einer Vielzahl verschiedener Bewertungskriterien, wie Durchmesser, Gewicht und Geradheit und Länge der Spargelstange und dergleichen mehr klassifiziert, sodass der klassifizierte Spargel im Anschluss direkt durch die Sortiereinrichtung nach den Bewertungskriterien sortiert werden kann. Die Klassifiziereinrichtung umfasst wenigstens einen Klassifiziersensor, wie eine Kameraeinrichtung, zur Klassifizierung des Spargels. Vorteilhaft ist der Spargel vor dem Klassifizieren bereits gereinigt und falls erforderlich gekürzt. Vorzugsweise ist die Klassifiziereinrichtung der Sortiereinrichtung vorgeschaltet.

In einer bevorzugten Ausführungsform kann die Klassifiziereinrichtung eine schiefe Ebene und eine Kameraeinrichtung umfassen. Der Spargel rollt in dieser Ausführungsform die schiefe Ebene hinunter. Dabei wird der Spargel durch die Kameraeinrichtung von verschiedenen Seiten aufgenommen. Die Bilder werden computergestützt ausgewertet und die Bewertungskriterien werden abgeleitet. Vorteilhaft werden die ermittelten Bewertungskriterien an die Sortiereinrichtung übermittelt, sodass diese den Spargel einem der Entnahmefächer nach verschiedenen Kriterien wie Bewertungskriterien und Gewicht zuordnen kann.

Bevorzugt ist wenigstens eine Reinigungseinrichtung zur Reinigung des Spargels und/oder eine Kürzungseinrichtung zur Kürzung des Spargels umfasst. Insbesondere sind beide Einrichtungen zu einer Reinigungs- und Kürzungseinrichtung zusammengefasst. Vorteilhaft umfasst die Kürzungseinrichtung hierzu wenigstens eine Kürzungseinheit, wie eine Säge oder einen Wasserstrahlschneider, durch welchen eine Spargelstange insbesondere am Fuß kürzbar ist. Vorzugsweise ist die maximale Länge einstellbar. Vorteilhaft ist die Kürzungseinrichtung vor die Klassifizierungseinrichtung vorgeschaltet.

Besonders bevorzugt ist wenigstens eine Vorlageeinrichtung zur Vorlage des Spargels, insbesondere per Hand, umfasst. Vorzugsweise umfasst die Vorlageeinrichtung wenigstens ein Vorlageband und insbesondere eine Mehrzahl an Vorlagebändern mit Mitnehmern zur definierten Vorlage und zum Transport des Spargels. Vorteilhaft bewegen sich die Vorlagebänder mit verschiedenen Geschwindigkeiten, um den Spargel von Hand vorzulegen und/oder eine Lage im Verhältnis zum Mitnehmer korrigieren zu können. Vorteilhaft ist die Vorlage per Hand einfach und effizient. Vorzugsweise ist die Vorlageeinrichtung der Reinigungs- und Kürzungseinrichtung am Anfang der Spargelsortiermaschine vorgeschaltet.

Insbesondere ist wenigstens eine Verpackungseinrichtung zur Bündelung und/oder Verpackung des sortierten und insbesondere abgewogenen Spargels umfasst. Besonders vorteilhaft ist der verpackte und/oder gebündelte Spargel fertig für den Verkauf. Vorteilhaft sind keine oder nur wenige Erntehelfer notwendig, sodass die Kosten für die Spargelverarbeitung erheblich reduziert werden. Vorzugsweise ist die Verpackungseinrichtung der Sortiereinrichtung nachgeschaltet. Vorteilhaft kann eine Verpackung und/oder eine Bündelung des sortierten und insbesondere abgewogenen Spargels direkt nach dem Sortieren erfolgen. Die Entnahmeeinrichtung kann den Spargel aus den Entnahmefächern automatisiert der Verpackungseinrichtung zuführen und/oder den verpackten und/oder gebündelten Spargel anschließend in Sammelbehälter ablegen.

Vorzugsweise sind zwei oder mehr Entnahmeeinrichtungen umfasst. Vorteilhaft sind die zwei oder mehr Entnahmeeinrichtungen entlang der Entnahmefächer der Sortiereinrichtung so positioniert, dass jede Entnahmeeinrichtung den sortierten Spargel aus einem Teilbereich der Entnahmefächer entnahmen kann. Vorteilhaft kann eine Spargelsortiermaschine auch vier oder sechs oder acht oder sogar zehn oder sogar eine noch größere Anzahl an Entnahmeeinrichtungen umfassen. Vorteilhaft können dadurch hohe Entnahmegeschwindigkeiten auch bei einer hohen Anzahl an Entnahmefächern ermöglicht werden. Vorteilhaft können die Entnahmeeinrichtungen untereinander über die Schnittstelleneinheiten verbunden sein, um Bewegungsabläufe zu koordinieren und Kollisionen zu vermeiden.

Eine nicht beanspruchte Entnahmeeinrichtung für eine Spargelsortiermaschine umfasst vorteilhaft wenigstens eine Robotereinrichtung zur Entnahme und Ablage des sortieren Spargels aus Entnahmefächern der Spargelsortiermaschine und insbesondere wenigstens einen Sammelbereich, an dem ein oder mehrere Sammelbehälter zur Aufnahme des entnommenen Spargels aufnehmbar sind.

Auch die Entnahmeeinrichtung hat viele Vorteile. Ein erheblicher Vorteil der Entnahmeeinrichtung ist, dass die automatisiere Entnahmeeinrichtung auch bei vorhandenen Spargelsortiermaschinen mit Sortiereinrichtung einfach und kostengünstig nachrüstbar ist, sodass Personalkosten und damit auch die Kosten für die Spargelverarbeitung reduzierbar sind. Weiterbildungen und Vorteile der Entnahmeeinrichtung ergeben sich aus der gesamten Anmeldung.

Auch das erfindungsgemäße Verfahren gemäß Anspruch 13 hat viele Vorteile. Ein erheblicher Vorteil des erfindungsgemäßen Verfahrens ist insbesondere, dass Entnahme und die Ablage des sortierten Spargels aus den Sortierfächern der Sortiereinrichtung der Spargelsortiermaschine automatisiert erfolgt. Weiterbildungen und Vorteile des erfindungsgemäßen Verfahrens ergeben sich aus der gesamten Anmeldung.

Weitere Merkmale und Vorteile des Ausführungsbeispiels der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine rein schematische perspektivische Ansicht einer erfindungsgemäßen Spargelsortiermaschine mit einer automatisierten Entnahmeeinrichtung;
- Fig. 2: eine rein schematische perspektivische Ansicht der erfindungsgemäßen automatisierten Entnahmeeinrichtung;
- Fig. 3: eine rein schematische Draufansicht auf die automatisierte Entnahmeeinrichtung; und
- Fig. 4: eine rein schematische Detailansicht einer Greifereinrichtung der automatisierten Entnahmeeinrichtung;
- Fig. 5a, b: rein schematische Detailansichten weiterer Ausführungsformen von Greifereinrichtungen mit alternativen Spanneinheiten; und
- Fig. 6: eine rein schematische Skizze zur Darstellung der Funktion der Spanneinheit der Greifereinrichtung mit verschiedenen Spannelementen.

Es ist nicht notwendig, dass eine erfindungsgemäße Spargelsortiermaschine 100 oder eine erfindungsgemäße Entnahmeeinrichtung 1 oder ein erfindungsgemäßes Verfahren alle nachfolgend beschriebenen Merkmale aufweist. Es ist auch möglich, dass eine erfindungsgemäße Spargelsortiermaschine 100 oder eine erfindungsgemäße Entnahmeeinrichtung 1 oder ein erfindungsgemäßes Verfahren nur einzelne Merkmale der nachfolgend beschriebenen Ausführungsbeispiels aufweist.

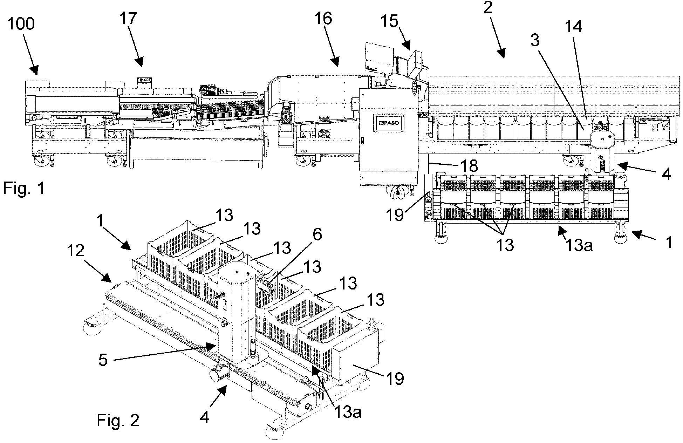

Fig. 1 zeigt eine rein schematische perspektivische Ansicht einer erfindungsgemäßen Spargelsortiermaschine 100 mit einer automatisierten Entnahmeeinrichtung 1. Die Spargelsortiermaschine 100 umfasst hier eine Vorlageeinrichtung 17, eine Reinigungs- und Kürzungseinrichtung 16, eine Klassifizierungseinrichtung 15 und eine Sortiereinrichtung 2 sowie die erfindungsgemäße automatisierte Entnahmeeinrichtung 1. In dieser beispielshaften Ausführungsform umfasst die Spargelsortiermaschine 100 eine Entnahmeeinrichtung 1 für die Entnahme des Spargels aus den Entnahmefächern 3. Die Spargelsortiermaschine 100 kann auch mehrere Entnahmeeinrichtungen 1 umfassen, die beispielsweise hinter längs zu den Entnahmefächern 3 angeordnet sind, sodass jede Entnahmeeinrichtung 1 für einen Teil der Entnahmefächer 3 zuständig ist.

Die Vorlageeinrichtung 17 umfasst Transportbänder mit Mitnehmern, zwischen welche die einzelnen Spargelstangen des geernteten Spargels per Hand eingelegt und auf die Verarbeitungsgeschwindigkeit gebracht werden. Anschließend wird der Spargel in der Reinigungs- und Kürzungseinrichtung 16 von Erde und Schmutz befreit. Außerdem wird der Spargel auf das Verkaufsmaß gekürzt.

Anschließend werden die einzelnen Spargelstangen in der Klassifiziereinrichtung 15 nach einer Vielzahl an Bewertungskriterien, wie dem Durchmesser, der Länge und der Gradheit und dem Gewicht, klassifiziert.

Anhand der Bewertungskriterien erfolgt die Sortierung des Spargels in der Sortiereinrichtung 2. Der klassifizierte Spargel wird entlang einer Transportrichtung transportiert und gezielt in einem zugeordneten Entnahmefach 3 abgelegt, basierend auf den Bewertungskriterien.

Eine Wiegeeinrichtung 14 ermittelt das Gewicht des Spargels in dem Entnahmefach 3. Wenn ein Zielgewicht in einem Entnahmefach 3 erreicht ist, wird über eine Schnittstelleneinheit, die hier ein Datenkabel 18 umfasst, an die Steuereinrichtung 19 der Entnahmeeinrichtung 1 übermittelt.

Der sortierte Spargel wird aus dem Entnahmefach 3 der Sortiereinrichtung 2 durch die Robotereinrichtung 4 der Entnahmeeinrichtung 1 entnommen.

Die automatisierte Entnahmeeinrichtung 1 ist hier über ein Datenkabel 18 einer Schnittelleneinheit mit der Sortiereinrichtung 2 verbunden. Dadurch kann eine Information an die Entnahmeeinrichtung 1 übermittelt werden, dass der sortierte Spargel aus dem Entnahmefach 3 entnommen werden kann. Weiter verfügt die Entnahmeeinrichtung 1 über separate Sensoren zur Steuerung der Bewegung der Entnahmeeinrichtung 1 und vor allem der Robotereinrichtung 4. Bei mehreren Entnahmeeinrichtungen 1 können diese auch untereinander verbunden sein, beispielsweise um eine Bewegung der Robotereinrichtungen 4 zu koordinieren und Kollisionen der Roboterarme 5 zu vermeiden.

Es kann weiter eine hier nicht dargestellte Verpackungseinrichtung vorhanden sein. Der sortierte Spargel kann durch die Entnahmeeinrichtung 1 der Verpackungseinrichtung zugeführt werden.

Fig. 2 zeigt eine rein schematische perspektivische Ansicht der erfindungsgemäßen automatisierten Entnahmeeinrichtung 1. Die automatisierte Entnahmeeinrichtung 1 weist hier eine Robotereinrichtung 4 auf. Die Robotereinrichtung 4 umfasst hier einen Roboterarm 5 mit mehreren Schwenkachsen und einer Greifereinrichtung 6 zur Aufnahme des Spargels aus den Entnahmefächern 3 der Sortiereinrichtung 2. Weiter umfasst die Robotereinrichtung 4 hier eine Portaleinheit 12, durch welche der Roboterarm 5 entlang der Sortiereinrichtung 2 verfahren werden kann, um den Spargel aus den verschiedenen Entnahmefächern 3 zu entnehmen. Weiter umfasst die Sortiereinrichtung 2 einen Sammelbereich 13a mit Sammelbehältern 13, in welche der klassifizierte und sortierte Spargel abgelegt wird.

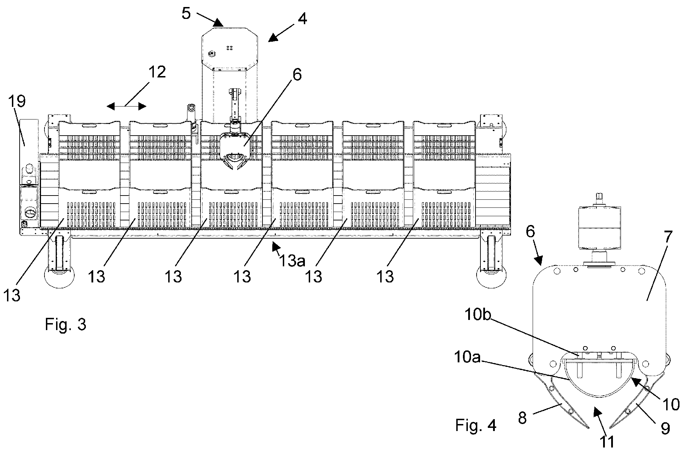

Fig. 3 zeigt eine rein schematische Draufansicht auf die automatisierte Entnahmeeinrichtung 1. An dem zum Roboterarm 5 gegenüberliegenden Sammelbereich 13a können die Sammelbehälter 13 entnommen und abtransportiert werden. Vorteilhaft kann der Spargel durch die Entnahmeeinrichtung 1 automatisiert aus den Entnahmefächern 3 der Sortiereinrichtung 2 entnommen und in den Sammelbehältern 13 nach Bewertungskriterien klassifiziert abgelegt werden.

Fig. 4 zeigt eine rein schematische Seitenansicht einer Greifereinrichtung 6 der automatisierten Entnahmeeinrichtung 1. Die Greifereinrichtung 6 umfasst hier einen Greiferkörper 7 mit zwei Greiferarmen 8, 9, welche zusammen einen Aufnahmeraum 11 zur Aufnahme des Spargels bilden. Weiter umfasst die Greifereinrichtung 6 eine Spanneinheit 10 zur Fixierung des Spargels in dem Aufnahmeraum 11. Durch das elastische Band 10a wird der Spargel in dem Aufnahmeraum 11 gegen die Greiferarme 8, 9 im geschlossen Zustand gedrückt. Das elastische Band 10a ist weiter an einer Einstelleinheit 10b der Spanneinheit 10 verschieblich aufgenommen, um auch kleine Spargelmengen, Bündel oder einzelne Spargelstangen sicher transportieren zu können.

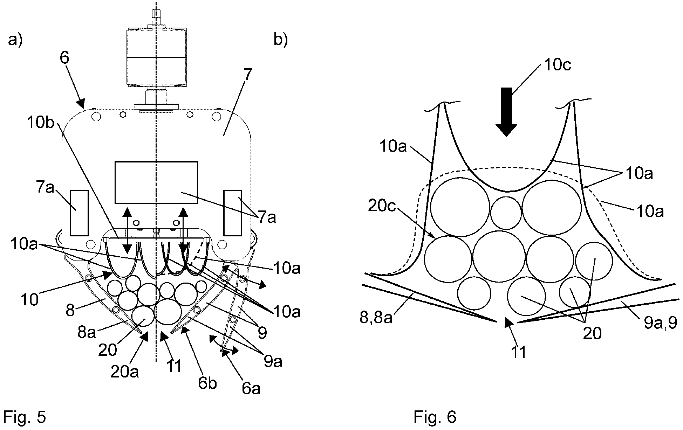

Fig. 5a und Fig. 5b zeigen rein schematische Ansichten weiterer Ausführungsformen von Greifereinrichtungen 6 mit alternativen Spanneinheiten 10. Hier sind schematisch Aktuatoreinheiten 7a zur Bewegung der Greiferarme 8, 9 und hier vorhandener beweglicher Endbereiche 8a, 9a vorhanden. Es sind eine Mehrzahl 20a an Spargelstangen 20 aufgenommen, welche eine vordefinierte Menge 20a bilden, hier durch ein vorgegebenes Gewicht von 500 Gramm. In Fig. 5a sind eine Mehrzahl an Spannelementen 10a vorhanden, die nebeneinander dargestellt sind. Durch die mehreren Spannelemente 10b kann eine Haltekraft 10c auf die Spargelstangen 20 noch besser bereitgestellt werden, vor allem in Bereichen, in denen sich eine Kontur 20c einer Mehrzahl 10a von Spargelstangen 20 sprunghaft oder sich stark verändert in vertikaler Richtung parallel zu einer Wirkungsrichtung einer Haltekraft 10c der Einstelleinheit 10b, vgl. Fig. 6. In Fig. 5 b sind die Spannelemente 10a teilweise hintereinander angeordnet, sodass die Haltekraft 10c in vertikaler Richtung noch besser aufbringbar ist. Vorteilhaft können dadurch auch benachbarte Spargelstangen 20 mit verschiedenen Durchmessern in der Greifereinrichtung 6 gehalten werden. Darüber hinaus ist auch noch ein einzelnes Spannelement 10a dargestellt als gestrichelte Linie, vgl. Fig 4.

Fig. 6 zeigt eine rein schematische Prinzipskizze zur Darstellung der Funktion der Spanneinheit 10 der Greifereinrichtung 6 mit verschiedenen Spannelementen 10b. Die gestrichelte Linie symbolisiert eine Spanneinheit 10 mit einem Spannelement 10 b. Das Spannelement 10b legt sich um die Kontur 10c der Spargelstangen 20. Aufgrund der Steifigkeit des Spannelements 10b kann das Spannelement 10b hier der sprunghaften Änderung in der Kontur 10c der Mehrzahl 20a an Spargelstangen 20 nicht folgen. Vor allem auf Spargelstangen 20 mit kleinem Durchmesser, welche sich zwischen Spargelstangen 20 mit erheblich größerem Durchmesser befinden, kann keine Haltekraft 10c oder eine nur unzureichende Haltekraft 10c durch das einzelne Spannelement 10b aufgebracht werden. Bei einer Handhabung einer Mehrzahl 20a an Spargelstangen 20 und einer vordefinierten Menge 20a an Spargelstangen 20 mit der Greifereinrichtung 6 können in diesem Fall gerade kleinere Spargelstangen 20 daher leicht aus dem Aufnahmeraum 11 während der Handhabung herausfallen. Eine Aufteilung des gleichen Bereichs in mehrere Spannelemente 10b, welche wenigstens teilweise nebeneinander angeordnet sind, ermöglichen die Haltekraft 10c durch die einzelnen Spannelemente 10b besser auf die einzelnen Spargelstangen 20 zu übertragen. Der Kontur 20c der Mehrzahl 20a an Spargelstangen kann besser gefolgt werden. Dadurch können auch Spargelstangen 20 mit kleinem Durchmesser sicherer in dem Aufnahmeraum 11 gehalten werden. Die einzelnen Spannelemente 10b können die Haltekraft 10c in vertikaler Richtung der Einstelleinheit 10b auf die Spargelstangen 20 übertragen. Auch bei sprunghaften Änderungen in der Kontur 20c der Mehrzahl 20a an Spargelstangen 20 wird die Haltekraft 10c hier auf die Spargelstangen 20 mit dem deutlich kleineren Durchmesser übertragen, sodass eine sichere Handhabung möglich ist.

### Bezugszeichen:

- 1: Entnahmeeinrichtung
- 2: Sortiereinrichtung
- 3: Entnahmefach
- 4: Robotereinrichtung
- 5: Roboterarm
- 6: Greifereinrichtung
- 6a: offener Zustand
- 6b: geschlossener Zustand
- 7: Greiferkörper
- 7a: Aktuatoreinheit
- 8: Greiferarm
- 8a: beweglicher Endbereich
- 9: Greiferarm
- 9a: beweglicher Endbereich
- 10: Spanneinheit
- 10a: Spannelement, elastisches Band
- 10b: Einstelleinheit
- 10c: Haltekraft
- 11: Aufnahmeraum
- 12: Portaleinheit
- 13: Sammelbehälter
- 13a: Sammelbereich
- 14: Wiegeeinrichtung
- 15: Klassifizierungseinrichtung
- 16: Kürzungseinrichtung
- 17: Vorlageeinrichtung
- 18: Datenkabel
- 19: Steuereinrichtung
- 20: Spargelstange
- 20a: Mehrzahl an Spargelstangen, vordefinierte Menge an Spargelstangen
- 20c: Kontur der Mehrzahl an Spargelstangen
- 100: Spargelsortiermaschine

## Patentansprüche

1. Spargelsortiermaschine (100) umfassend wenigstens eine Sortiereinrichtung (2) zur Sortierung von Spargel mit wenigstens einer Mehrzahl an Entnahmefächern (3) zur Aufnahme des sortierten Spargels,
**dadurch gekennzeichnet, dass**
wenigstens eine automatisierte Entnahmevorrichtung (1) zur Entnahme und Ablage des sortierten Spargels, insbesondere aus den Entnahmefächern (3), umfasst ist, und die Entnahmevorrichtung (1) wenigstens eine Robotereinrichtung (4) umfasst.

2. Spargelsortiermaschine (100) nach dem vorhergehenden Anspruch, wobei die Robotereinrichtung (4) wenigstens einen beweglichen Roboterarm (5) umfasst.

3. Spargelsortiermaschine (100) nach dem vorhergehenden Anspruch, wobei die Robotereinrichtung (4) wenigstens eine Greifereinrichtung (6) zur Handhabung des Spargels, und insbesondere zur Aufnahme aus den Entnahmefächern (3) umfasst.

4. Spargelsortiermaschine (100) nach dem vorhergehenden Anspruch, wobei die Greifereinrichtung (6) wenigstens einen Greiferkörper (7) und wenigstens einen Greiferarme (8, 9) aufweist, die einen Aufnahmeraum (10) für die Aufnahme des Spargels aus den Entnahmefächern (3) bilden.

5. Spargelsortiermaschine (100) nach dem vorhergehenden Anspruch, wobei die Greifereinrichtung (6) wenigstens eine einstellbare Spanneinheit (10) mit einem oder einer Mehrzahl an Spannelementen (10a) aufweist, insbesondere zur Fixierung des aufgenommenen Spargels in dem Aufnahmeraum (11).

6. Spargelsortiermaschine (100) nach einem der vorhergehenden Ansprüche, wobei die Robotereinrichtung (4) wenigstens eine Portaleinheit (12) umfasst.

7. Spargelsortiermaschine (100) nach einem der vorhergehenden Ansprüche, wobei die Entnahmeeinrichtung (1) wenigstens mit der Sortiereinrichtung (2) über eine Schnittstelleneinheit einer Steuereinrichtung (19) der Entnahmeeinrichtung (1) verbunden ist.

8. Spargelsortiermaschine (100) nach einem der vorhergehenden Ansprüche, wobei die Entnahmeeinrichtung (1) wenigstens einen Sammelbereich (13a) für wenigstens einen Sammelbehälter (13) und insbesondere eine Mehrzahl an Sammelbehältern (13) umfasst.

9. Spargelsortiermaschine (100), nach einem der vorhergehenden Ansprüche die Sortiereinrichtung (2) wenigstens eine Wiegeeinrichtung (14) für jedes Entnahmefach (3) umfasst.

10. Spargelsortiermaschine (100) nach einem der vorhergehenden Ansprüche, umfassend wenigstens eine Klassifiziereinrichtung (15) zur Klassifizierung des Spargels.

11. Spargelsortiermaschine (100) nach einem der vorhergehenden Ansprüche, umfassend wenigstens eine Reinigungs- und/oder Kürzungseinrichtung (16) zur Reinigung und/oder Kürzung des Spargels.

12. Spargelsortiermaschine (100) nach einem der vorhergehenden Ansprüche, umfassend wenigstens eine Vorlageeinrichtung (17) zur Vorlage des Spargels, insbesondere per Hand.

13. Verfahren zur Entnahme von Spargel aus einer mehrere Entnahmefächer (3) umfassenden Sortiereinrichtung (2) einer Spargelsortiermaschine (100) nach einem der Ansprüche 1 bis 12, **dadurch gekennzeichnet, dass** der sortierte Spargel automatisiert durch eine eine Robotereinrichtung umfassende Entnahmeeinrichtung (1), insbesondere aus einem Entnahmefach (3), entnommen und abgelegt wird.

## Claims

1. Asparagus sorting machine (100) comprising at least one sorting device (2) for sorting asparagus, said sorting device having at least a plurality of removal compartments (3) for receiving the sorted asparagus,
**characterized in that**
at least one automated removal device (1) for removing and depositing the sorted asparagus, in particular from the removal compartments (3), is comprised, and the removal device (1) comprises at least one robot device (4).

2. Asparagus sorting machine (100) according to the preceding claim, wherein the robot device (4) comprises at least one movable robot arm (5).

3. Asparagus sorting machine (100) according to the preceding claim, wherein the robot device (4) comprises at least one gripper device (6) for handling the asparagus, and in particular for receiving it from the removal compartments (3).

4. Asparagus sorting machine (100) according to the preceding claim, wherein the gripper device (6) has at least one gripper body (7) and at least one gripper arm (8, 9), which form a receiving space (10) for receiving the asparagus from the removal compartments (3).

5. Asparagus sorting machine (100) according to the preceding claim, wherein the gripper device (6) has at least one adjustable clamping unit (10) with one or a plurality of clamping elements (10a), in particular for fixing the received asparagus in the receiving space (11).

6. Asparagus sorting machine (100) according to any one of the preceding claims, wherein the robot device (4) comprises at least one gantry unit (12).

7. Asparagus sorting machine (100) according to any one of the preceding claims, wherein the removal device (1) is connected at least to the sorting device (2) via an interface unit of a control device (19) of the removal device (1).

8. Asparagus sorting machine (100) according to any one of the preceding claims, wherein the removal device (1) comprises at least one collecting region (13a) for at least one collecting container (13) and in particular a plurality of collecting containers (13).

9. Asparagus sorting machine (100), according to any one of the preceding claims the sorting device (2) comprises at least one weighing device (14) for each removal compartment (3).

10. Asparagus sorting machine (100) according to any one of the preceding claims, comprising at least one classification device (15) for classifying the asparagus.

11. Asparagus sorting machine (100) according to any one of the preceding claims, comprising at least one cleaning and/or shortening device (16) for cleaning and/or shortening the asparagus.

12. Asparagus sorting machine (100) according to any one of the preceding claims, comprising at least one presentation device (17) for presenting the asparagus, in particular by hand.

13. Method for removing asparagus from a sorting device (2), comprising a plurality of removal compartments (3), of an asparagus sorting machine (100) according to any one of claims 1 to 12, **characterized in that** the sorted asparagus is removed and deposited in an automated manner by a removal device (1) comprising a robot device, in particular from a removal compartment (3).

## Revendications

1. Machine de tri d'asperges (100) comprenant au moins un appareil de tri (2) pour trier des asperges avec au moins une pluralité de compartiments de prélèvement (3) pour loger les asperges triées,
**caractérisée en ce que**
au moins un dispositif de prélèvement automatisé (1) pour prélever et déposer les asperges triées, en particulier à partir des compartiments de prélèvement (3), est compris, et le dispositif de prélèvement (1) comprend au moins un appareil robotisé (4).

2. Machine de tri d'asperges (100) selon la revendication précédente, dans laquelle l'appareil robotisé (4) comprend au moins un bras robotisé mobile (5).

3. Machine de tri d'asperges (100) selon la revendication précédente, dans laquelle l'appareil robotisé (4) comprend au moins un appareil de préhension (6) pour manipuler les asperges, et en particulier pour les loger à partir des compartiments de prélèvement (3).

4. Machine de tri d'asperges (100) selon la revendication précédente, dans laquelle l'appareil de préhension (6) présente au moins un corps de préhension (7) et au moins un bras de préhension (8, 9) qui forment un espace de logement (10) pour loger les asperges à partir des compartiments de prélèvement (3).

5. Machine de tri d'asperges (100) selon la revendication précédente, dans laquelle l'appareil de préhension (6) présente au moins une unité de serrage réglable (10) avec un ou une pluralité d'éléments de serrage (10a), en particulier pour fixer les asperges prélevées dans l'espace de logement (11).

6. Machine de tri d'asperges (100) selon l'une quelconque des revendications précédentes, dans laquelle l'appareil robotisé (4) comprend au moins une unité à portique (12).

7. Machine de tri d'asperges (100) selon l'une quelconque des revendications précédentes, dans laquelle l'appareil de prélèvement (1) est connecté au moins à l'appareil de tri (2) par l'intermédiaire d'une unité d'interface d'un appareil de commande (19) de l'appareil de prélèvement (1).

8. Machine de tri d'asperges (100) selon l'une quelconque des revendications précédentes, dans laquelle l'appareil de prélèvement (1) comprend au moins une zone de collecte (13a) pour au moins un récipient de collecte (13) et en particulier une pluralité de récipients de collecte (13).

9. Machine de tri d'asperges (100) selon l'une quelconque des revendications précédentes, dans laquelle l'appareil de tri (2) comprend au moins un appareil de pesage (14) pour chaque compartiment de prélèvement (3).

10. Machine de tri d'asperges (100) selon l'une quelconque des revendications précédentes, comprenant au moins un appareil de classement (15) pour classer les asperges.

11. Machine de tri d'asperges (100) selon l'une quelconque des revendications précédentes, comprenant au moins un appareil de nettoyage et/ou de raccourcissement (16) pour nettoyer et/ou raccourcir les asperges.

12. Machine de tri d'asperges (100) selon l'une quelconque des revendications précédentes, comprenant au moins un appareil de présentation (17) pour présenter les asperges, en particulier à la main.

13. Procédé de prélèvement d'asperges depuis un appareil de tri (2) comprenant plusieurs compartiments de prélèvement (3) d'une machine de tri d'asperges (100) selon l'une quelconque des revendications 1 à 12, **caractérisé en ce que** les asperges triées sont prélevées de manière automatisée par un appareil de prélèvement (1) comprenant un appareil robotisé, en particulier depuis un compartiment de prélèvement (3), et déposées.
